(19) Europäisches Patentamt
European Patent Office
Office européen des brevets

(11) **EP 3 639 997 A1**

(12) **EUROPÄISCHE PATENTANMELDUNG**

(43) Veröffentlichungstag:
**22.04.2020   Patentblatt 2020/17**

(51) Int Cl.:
**B29C 44/34** (2006.01)   **C08J 9/12** (2006.01)
**C08J 9/18** (2006.01)

(21) Anmeldenummer: **18020498.4**

(22) Anmeldetag: **15.10.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Linde Aktiengesellschaft**
**80331 München (DE)**

(72) Erfinder:
• **Heninger, Rolf**
  **85635 Höhenkirchen-Siegertsbrunn (DE)**

• **Praller, Andreas**
  **82110 Germering (DE)**
• **Szych, Pawel**
  **81241 München (DE)**

(74) Vertreter: **Gellner, Bernd**
**Linde AG**
**Technology & Innovation**
**Corporate Intellectual Property**
**Dr.-Carl-von-Linde-Straße 6-14**
**82049 Pullach (DE)**

(54)   **VERFAHREN ZUM IMPRÄGNIEREN VON POLYMERGRANULAT**

(57)   Die Erfindung betrifft ein Verfahren zum Impr±gnieren eines Polymergranulates (110) mit einer vordefinierten Masse eines gasfØrmigen Treibmittels. Dabei wird das Polymergranulat (110) in einem Innen-raum eines Druckbeh±lters (100) angeordnet und ein gasfØrmiges Treibmittel wird in den Innenraum des Druckbeh±lters (100) eingeleitet.

Figur 1A

**Beschreibung**

Die Erfindung betrifft ein Verfahren zum Imprägnieren von Polymergranulat.

Ein Polymergranulat wird mit einem Treibmittel imprägniert, bevor das derartig behandelte Polymergranulat für die Herstellung eines Bauteils, beispielsweise durch die Spritzgusstechnik, verwandt wird.

Unter dem Begriff "imprägnieren" ist zu verstehen, dass das Treibmittel von dem Polymergranulat absorbiert wird. Das Treibmittel wird dabei zumindest teilweise vom Polymergranulat aufgenommen bzw. an dieses gebunden. Dies kann auch als Beladen des Polymergranulates mit dem Treibmittel bezeichnet werden. Wie viel Treibmittel in Relation zum Polymergranulat vom Polymergranulat absorbiert wurde, wird auch als "Grad der Beladung" bezeichnet.

Nach dem Stand der Technik sind Verfahren zum Imprägnieren eines Polymergranulates bekannt, bei denen ein Polymergranulat mit dem Treibmittel bei einem vordefinierten Druck und einer vordefinierten Temperatur für eine vorgegebene Zeit imprägniert wird. Die vorgegebene Zeit, der vordefinierte Druck und die vordefinierte Temperatur basieren beispielsweise auf zuvor durchgeführten Versuchsreihen.

Einige Verfahren des Stands der Technik weisen vor dem Imprägnieren einen zusätzlichen Vorbereitungsschritt ("conditioning") auf, bei dem das Polymergranulat vorbehandelt wird und dabei beispielsweise auf eine bestimmte Temperatur temperiert wird. Dies erfordert eine zusätzliche Vorrichtung für das Durchführen des Vorbereitungsschrittes. Zudem erhöht sich der Zeitaufwand gegenüber einem Verfahren, bei dem kein Vorbereitungsschritt durchgeführt wird.

Bei einer Vielzahl von Verwendungen eines imprägnierten Polymergranulates ist ein bestimmter Grad der Beladung vorgesehen.

Bei den Verfahren, die aus dem Stand der Technik bekannt sind, ist während des Vorgangs des Imprägnierens nicht bekannt, wie viel Treibmittel vom Polymergranulat aufgenommen wurde, d.h. während des Verfahrens ist der Grad der Beladung nicht bekannt. Um die entsprechenden Bedingungen für einen bestimmten Grad der Beladung zu bestimmen, sind aufwendige Versuchsreihen notwendig. Dennoch kann das Polymergranulat nach der vorgegebenen Zeit des Imprägnierens einen Grad der Beladung aufweisen, der niedriger oder höher als der gewünschte Grad der Beladung ist. Dies kann beispielsweise daran liegen, dass die Versuchsreihen nicht ausführlich genug sind oder daran, dass das Polymergranulat eine andere Anfangsbedingung, z.B. eine andere Temperatur, aufweist als bei den Versuchsreihen. Um letzterem entgegenzuwirken, kann das Polymergranulat vor dem Imprägnieren zumindest einem Vorbehandlungsschritt ausgesetzt werden.

Es ist ein Verfahren von Interesse, bei dem der Grad der Beladung während des Imprägnierens bestimmt werden kann.

Diese Aufgabe wird durch ein Verfahren zum Imprägnieren eines Polymergranulates mit einer vordefinierten Masse eines gasförmigen Treibmittels nach Anspruch 1 oder ein Verfahren zum Imprägnieren eines Polymergranulates mit einer vordefinierten Masse eines gasförmigen Treibmittels nach Anspruch 5 gelöst. Vorteilhafte Ausgestaltungen der Verfahren sind in den entsprechenden Unteransprüchen angegeben.

Ein erster Aspekt der Erfindung betrifft ein Verfahren zum Imprägnieren eines Polymergranulates mit einer vordefinierten Masse eines gasförmigen Treibmittels. Dabei wird das Polymergranulat in einem Innenraum eines Druckbehälters angeordnet und ein gasförmiges Treibmittel initial in den Innenraum des Druckbehälters eingeleitet. Das Treibmittel wird vom Polymergranulat absorbiert und ein im Innenraum herrschender momentaner Druck $p_2$ bestimmt. Dabei wird eine momentane Masse $\Delta m$ des durch das Polymergranulat absorbierten Treibmittels als Differenz der Masse $m_1$ des insgesamt initial in den Innenraum des Druckbehälters eingeleiteten Treibmittels und der Masse $m_2$ eines momentan im Innenraum befindlichen nicht-absorbierten Teils des Treibmittels bestimmt. Das Verfahren wird abgebrochen, wenn die momentane Masse des absorbierten Treibmittels größer oder gleich der vordefinierten Masse ist.

Der Druckbehälter kann ein Autoklav sein.

Der momentane Druck kann mithilfe zumindest eines Drucksensors im Innenraum des Druckbehälters bestimmt werden, insbesondere gemessen werden. Der zumindest eine Drucksensor kann Druckdaten aufnehmen. In einer Ausführungsform des erfindungsgemäßen Verfahrens kann der zumindest eine Drucksensor die aufgenommenen Druckdaten zur weiteren Verwendung zur Verfügung stellen.

Weiterhin kann der momentane Druck wiederholt während der Absorption des Treibmittels gemessen werden. In einer Ausführungsform des Verfahrens kann der momentane Druck kontinuierlich bestimmt werden.

Unter Verwendung der initial eingeleiteten Masse und des momentanen Drucks kann die nicht-absorbierte Masse des Treibmittels berechnet werden. Die Differenz zwischen der initial eingeleiteten Masse und der nicht-absorbierten Masse ergibt die momentane Masse des durch das Polymergranulat absorbierten Treibmittels. Das bedeutet, dass die momentane Masse des durch das Polymergranulat absorbierten Treibmittels unter Verwendung von physikalischen Größen, die einfach messbar sind, berechnet werden kann.

Ein Vorteil dieses erfindungsgemäßen Verfahrens ist, dass die momentane Masse des absorbierten Treibmittels bestimmt werden kann, insbesondere während des Vorgangs des Imprägnierens bestimmt werden kann. Sobald die momentane Masse des absorbierten Treibmittels größer oder gleich der vordefinierten Masse ist, kann das Imprägnieren abgebrochen, d.h. beendet, werden. Das bedeutet mit anderen Worten, dass während des Imprägnierens der Grad der Beladung bestimmt und das Imprägnieren beendet werden kann, sobald ein vordefinierter Grad der Beladung erreicht ist. In einer Ausführungsform des Verfahrens wird das Verfahren automatisch beendet, wenn die momentane Masse des absorbierten Treibmittels größer oder gleich der vordefinierten Masse ist.

Ferner sind weder eine Vorbehandlung des Polymergranulates noch zuvor ausgeführte Versuchsreihen notwendig, so dass durch das Verfahren sowohl ein zeitlicher also auch ein finanzieller Vorteil erreicht werden kann.

Gemäß einer Ausführungsform des Verfahrens wird eine momentane Temperatur $T_2$ im Innenraum des Druckbehälters gemessen.

Die momentane Temperatur ist die momentan im Innenraum des Druckbehälters herrschende Temperatur.

Die momentane Temperatur $T_2$ kann mithilfe zumindest eines Temperatursensors im Innenraum des Druckbehälters gemessen werden. In einer Ausführungsform kann die momentane Temperatur wiederholt gemessen werden. In einer Ausführungsform kann die momentane Temperatur kontinuierlich gemessen werden.

Der zumindest eine Temperatursensor kann dazu ausgebildet sein, Temperaturdaten aufzunehmen. Gemäß einer Ausführungsform kann der zumindest eine Temperatursensor die aufgenommenen Temperaturdaten zur weiteren Verwendung zur Verfügung stellen.

Auf eine Messung der Temperatur kann verzichtet werden, wenn ihr Einfluss auf die Bestimmung der absorbierten Treibmittelmenge als vernachlässigbar oder die Temperatur im Druckbehälter als konstant angesehen werden kann, etwa durch eine ausreichend gute thermische Isolation.

Das bedeutet mit anderen Worten, dass zur Bestimmung der absorbierten Menge des Treibmittels zumindest bei einem nicht-ausreichend isolierten Druckbehälter die momentane Temperatur im Innenraum des Druckbehälters gemessen werden muss, um den Einfluss der Temperatur zu berücksichtigen.

Nach einer Ausführungsform des Verfahrens wird die momentane Masse mittels einer speicherprogrammierbaren Steuerung bestimmt.

In einer Ausführungsform ist die speicherprogrammierbare Steuerung derart konfiguriert, dass sie unter Verwendung der Druckdaten oder der Druck- und der Temperaturdaten die momentane Masse berechnen kann.

Gemäß einer Ausführungsform kann die speicherprogrammierbare Steuerung die momentane Masse kontinuierlich unter Verwendung des momentanen Druckes oder des momentanen Druckes und der momentanen Temperatur berechnen.

Wenn die berechnete momentane Masse des absorbierten Treibmittels größer oder gleich einer vordefinierten Masse ist, wird das Verfahren des Imprägnierens abgebrochen bzw. beendet.

Ein Vorteil dieser Ausführungsform ist, dass die momentane Masse des absorbierten Treibmittels automatisch kontinuierlich berechnet wird, so dass jederzeit der Grad der Beladung bestimmt werden kann. Der Prozess des Imprägnierens kann sofort beendet werden, wenn der vordefinierte Grad der Beladung erreicht ist, d.h. wenn die berechnete momentane Masse des absorbierten Treibmittels größer oder gleich einer vordefinierten Masse ist.

Gemäß einer Ausführungsform ist das Verfahren dadurch gekennzeichnet, dass die Masse des momentan im Innenraum befindlichen nicht-absorbierten Teils des Treibmittels ($m_2$) mittels der Beziehung:

$$m_2 = m_1 \cdot \frac{T_1 \cdot p_2}{T_2 \cdot p_1}$$

bestimmt wird.

Dabei sind $p_1$ und $T_1$ ein im Innenraum vor der Absorption des Treibmittels herrschender Anfangsdruck und eine im Innenraum vor der Absorption des Treibmittels herrschende Anfangstemperatur. $p_2$ und $T_2$ sind der gemessene momentane Druck und die gemessene momentane Temperatur im Innenraum des Druckbehälters. Die Masse $m_1$ bezeichnet die Masse des insgesamt initial in den Innenraum des Druckbehälters eingeleiteten Treibmittels.

Sofern man davon ausgehen kann, dass die Temperatur im Druckbehälter während der Imprägnierung annähernd unverändert bleibt, d.h. es gilt $T_1 = T_2$, kann die Beziehung vereinfacht werden zu:

$$m_2 = m_1 \cdot \frac{p_2}{p_1}$$

Die Anfangstemperatur liegt insbesondere in einem Bereich zwischen 0°C und 180°C, insbesondere zwischen 10°C und 120°C. Der Anfangsdruck liegt insbesondere zwischen 80bar und 5bar, insbesondere zwischen 45bar und 30bar.

In einer Ausführungsform des Verfahrens kann die Masse des initial in den Innenraum des Druckbehälters eingeleiteten Treibmittels ($m_1$) unter Verwendung der idealen Gasgleichung bestimmt werden.

Dabei besteht für die Masse $m_1$ der folgende Zusammenhang:

$$m_1 = \frac{p_1 \cdot V}{R_S \cdot T_1}$$

wobei V ein Volumen des Treibmittels im Druckbehälter ist, das aus der Differenz eines Volumens des Innenraums des Druckbehälters und eines Volumens des im Innenraum angeordneten Polymergranulates bestimmt werden kann. Das Volumen des im Innenraum angeordneten Polymergranulates ist dabei ein Volumen, welches durch das Polymergranulat im Innenraum des Druckbehälters eingenommen wird.

$R_S$ bezeichnet eine spezifische Gaskonstante. Die spezifische Gaskonstante eines Treibmittels kann unter Verwendung der universellen Gaskonstante und einer molaren Masse des Treibmittels berechnet werden.

In einer alternativen Ausführungsform wird die Masse des initial in den Innenraum des Druckbehälters eingeleiteten Treibmittels beim Einleiten des Treibmittels bestimmt.

Die Masse des momentan im Innenraum befindlichen nicht-absorbierten Teils des Treibmittels kann daher vorteilhaft unter Verwendung einfach bestimmbarer physikalischer Größen bestimmt werden.

Ein weiterer Aspekt der Erfindung betrifft ein Verfahren zum Imprägnieren eines Polymergranulates mit einer vordefinierten Masse eines gasförmigen Treibmittels, wobei das Polymergranulat in einem Innenraum eines Druckbehälters angeordnet wird. Ein gasförmiges Treibmittel wird initial in den Innenraum des Druckbehälters eingeleitet, so dass Treibmittel vom Polymergranulat absorbiert wird. Hiernach wird nachträglich Treibmittel in den Innenraum des Druckbehälters nachgefüllt, wobei die Massen des initial $m_1$ und des nachträglich eingeleiteten Treibmittels $\Delta m_a$ bestimmt werden. Eine momentane Masse $\Delta m$ des durch das Polymergranulat absorbierten Treibmittels wird unter Verwendung der Massen des initial und nachträglich in den Innenraum eingeleiteten Treibmittels bestimmt. Das Verfahren wird abgebrochen, wenn die momentane Masse des absorbierten Treibmittels größer oder gleich der vordefinierten Masse ist.

Der Druckbehälter ist beispielsweise ein Autoklav.

Der momentane Druck kann mithilfe zumindest eines Drucksensors im Innenraum des Druckbehälters bestimmt werden. Der zumindest eine Drucksensor kann Druckdaten aufnehmen. In einer Ausführungsform des erfindungsgemäßen Verfahrens können die aufgenommenen Druckdaten zur weiteren Verwendung zur Verfügung gestellt werden.

Der momentane Druck kann wiederholt während der Absorption des Treibmittels gemessen werden. In einer Ausführungsform des Verfahrens kann der momentane Druck kontinuierlich bestimmt werden.

Die momentane Masse des absorbierten Treibmittels kann während des Vorgangs des Imprägnierens bestimmt werden kann. Sobald die momentane Masse des absorbierten Treibmittels größer oder gleich der vordefinierten Masse ist, kann das Imprägnieren abgebrochen werden. Mit anderen Worten heißt das, dass während des Imprägnierens der Grad der Beladung bestimmt werden kann. Das Imprägnieren kann abgebrochen werden, sobald ein vordefinierter Grad der Beladung erreicht ist, d.h. dass der Vorgang des Imprägnierens sofort beendet werden kann, wenn der vordefinierte Grad der Beladung erreicht ist.

In einer Ausführungsform des Verfahrens wird das Verfahren automatisch abgebrochen, wenn die momentane Masse des absorbierten Treibmittels größer oder gleich der vordefinierten Masse ist.

Gemäß einer Ausführungsform des Verfahrens wird eine momentane Temperatur $T_2$ im Innenraum des Druckbehälters gemessen.

Dabei ist die momentane Temperatur die momentan im Innenraum des Druckbehälters herrschende Temperatur.

Die momentane Temperatur $T_2$ kann mithilfe zumindest eines Temperatursensors im Innenraum des Druckbehälters gemessen werden. In einer Ausführungsform kann die momentane Temperatur wiederholt bestimmt werden. In einer Ausführungsform kann die momentane Temperatur kontinuierlich gemessen werden.

Der zumindest eine Temperatursensor kann dazu ausgebildet sein, Temperaturdaten aufzunehmen. Nach einer Ausführungsform des Verfahrens kann der zumindest eine Temperatursensor die aufgenommenen Temperaturdaten zur weiteren Verwendung zur Verfügung stellen.

Gemäß einer Ausführungsform ist das Verfahren dadurch gekennzeichnet, dass der im Innenraum herrschende momentane Druck $p_2$ gemessen wird und das jeweils nachträglich eingeleitete Treibmittel kontinuierlich in den Innenraum eingeleitet wird, so dass der im Innenraum herrschende Druck konstant bleibt.

Mit anderen Worten bedeutet das, dass kontinuierlich nachträglich Treibmittel in den Druckbehälter eingeleitet wird, so dass der im Innenraum des Druckbehälters herrschende Druck konstant bleibt.

Vor der Absorption des Treibmittels herrscht im Innenraum des Druckbehälters ein Anfangsdruck ($p_1$). In einer Ausführungsform des Verfahrens wird derart nachträglich Treibmittel eingeleitet, dass der momentan herrschende Druck gleich dem Anfangsdruck ist.

Das Treibmittel kann nachträglich mithilfe eines Druckreglers in den Innenraum des Druckbehälters eingeleitet werden.

Vorteilhaft an dieser Ausführungsform des Verfahrens ist, dass der im Innenraum herrschende Druck konstant bleibt und somit die Bedingungen des Imprägnierens stabil bleiben.

In einer alternativen Ausführungsform wird der im Innenraum herrschende momentane Druck $p_2$ gemessen und das jeweils nachträglich eingeleitete Treibmittel in regelmäßigen Intervallen in den Innenraum eingeleitet, so dass der nach dem jeweiligen Intervall im Innenraum herrschende Druck konstant ist.

In einer Ausführungsform ist der nach dem jeweiligen Intervall im Innenraum herrschende Druck gleich dem Anfangsdruck.

Gemäß einer Ausführungsform wird nachträglich Treibmittel in den Innenraum des Druckbehälters eingeleitet, wenn die Differenz zwischen dem nach dem jeweiligen Intervall im Innenraum herrschende Druck und dem momentan herrschenden Druck $p_2$ betragsmäßig insbesondere größer ist als 1 bar, insbesondere größer als 0,5 bar, insbesondere größer als 0,1 bar.

Nach einer weiteren Ausführungsform des Verfahrens wird die momentane Masse ($\Delta m$) des durch das Polymergranulat absorbierten Treibmittels mittels der Beziehung

$$\Delta m = \Delta m_a + m_1 \cdot \left( 1 - \frac{T_1}{T_2} \right)$$

bestimmt.

Dabei sind $m_1$ und $\Delta m_a$ die Massen des initial und des nachträglich in den Druckbehälter eingeleiteten Treibmittels. $T_1$ ist eine im Innenraum vor der Absorption des Treibmittels herrschende Anfangstemperatur und $T_2$ ist die momentane Temperatur im Innenraum des Druckbehälters.

Sofern man davon ausgehen kann, dass die Temperatur im Druckbehälter während der Imprägnierung annähernd unverändert bleibt (d.h. es gilt $T_1 = T_2$), entspricht die absorbierte Menge des Treibmittels der Menge des nachträglich eingeleiteten Treibmittels, d.h. $\Delta m = \Delta m_a$.

In einer Ausführungsform kann die Masse des nachträglich in den Druckbehälter eingeleiteten Treibmittels mithilfe eines Massendurchflussmessers gemessen werden. In einer alternativen Ausführungsform kann die Masse des nachträglich in den Druckbehälter eingeleiteten Treibmittels bestimmt werden aus einer Änderung einer Gesamtmasse vom Druckbehälter mit dem im Innenraum befindlichen Polymergranulat und dem Treibmittel.

Das bedeutet, dass die momentane Masse unter Verwendung einfach bestimmbarer Messgrößen wie den Massen des initial und des nachträglich in den Druckbehälter eingeleiteten Treibmittels bestimmt werden kann. Eine Ausführungsform des Verfahrens ist dadurch charakterisiert, dass der im Innenraum herrschende momentane Druck gemessen wird. Ferner wird die momentane Masse $\Delta m$ des durch das Polymergranulat absorbierten Treibmittels unter Verwendung der Massen des initial und nachträglich in den Innenraum eingeleiteten Treibmittels und des momentanen Drucks $p_2$ bestimmt. Das Verfahren wird abgebrochen, wenn die momentane Masse $\Delta m$ des absorbierten Treibmittels größer oder gleich der vordefinierten Masse ist.

In einer Ausführungsform kann die momentane Masse wiederholt bestimmt werden. In einer alternativen Ausführungsform kann die momentane Masse kontinuierlich bestimmt werden.

Gemäß einer Ausführungsform des Verfahrens wird eine momentane Temperatur $T_2$ im Innenraum des Druckbehälters gemessen.

Dabei ist die momentane Temperatur die momentan im Innenraum des Druckbehälters herrschende Temperatur.

Die momentane Temperatur $T_2$ kann mithilfe zumindest eines Temperatursensors im Innenraum des Druckbehälters gemessen werden. In einer Ausführungsform kann die momentane Temperatur wiederholt bestimmt werden. In einer Ausführungsform kann die momentane Temperatur kontinuierlich gemessen werden.

Der zumindest eine Temperatursensor kann dazu ausgebildet sein, Temperaturdaten aufzunehmen. Nach einer Ausführungsform des Verfahrens kann der zumindest eine Temperatursensor die aufgenommenen Temperaturdaten zur weiteren Verwendung zur Verfügung stellen.

Gemäß einer Ausführungsform des Verfahrens wird die momentane Masse $\Delta m$ des durch das Polymergranulat absorbierten Treibmittels mittels der Beziehung:

$$\Delta m = \Delta m_a + m_1 \cdot \left( 1 - \frac{T_1 \cdot p_2}{T_2 \cdot p_1} \right)$$

bestimmt.

Dabei sind $p_1$ und $T_1$ ein im Innenraum vor der Absorption des Treibmittels herrschender Anfangsdruck und eine im Innenraum vor der Absorption des Treibmittels herrschende Anfangstemperatur. $p_2$ und $T_2$ sind der gemessene momentane Druck und die gemessene momentane Temperatur im Innenraum des Druckbehälters. $m_1$ und $\Delta m_a$ sind die Massen des initial und des nachträglich in den Druckbehälter eingeleiteten Treibmittels.

Gemäß einer Ausführungsform des Verfahrens wird die Masse des initial in den Innenraum des Druckbehälters eingeleiteten Treibmittels, die nachträglich eingeleitete Masse $\Delta m_a$ oder die initial und die nachträglich eingeleiteten Massen $m_1$, $\Delta m_a$ des Treibmittels beim Einleiten des Treibmittels in den Innenraum des Druckbehälters mithilfe eines Massendurchflussmessers bestimmt.

Ein geeigneter Massendurchflussmesser ist z.B. ein Coriolis-Massendurchflussmesser, es kann aber auch ein anderes Messprinzip verwendet werden.

Mithilfe eines Massendurchflussmessers kann auf einfache Weise die Masse des initial und/oder nachträglich in den Innenraum des Druckbehälters eingeleiteten Treibmittels gemessen werden.

Gemäß einer Ausführungsform des Verfahrens wird die Masse des initial in den Innenraum des Druckbehälters eingeleiteten Treibmittels, die nachträglich eingeleitete Masse $\Delta m_a$ oder die initial und die nachträglich eingeleiteten Massen $m_1$, $\Delta m_a$ des Treibmittels mithilfe einer Waage, einer Wägezelle oder eines Kraftaufnehmers bestimmt.

Es kann eine Anfangsgesamtmasse vom Druckbehälter mit dem im Innenraum befindlichen Polymergranulat bestimmt werden. Insbesondere kann mittels einer Waage, einer Wägezelle oder eines Kraftaufnehmers eine Gesamtmasse vom Druckbehälter mit dem im Innenraum befindlichen Polymergranulat und dem Treibmittel bestimmt werden. Die Bestimmung der Gesamtmasse kann wiederholt erfolgen, so dass eine momentane Gesamtmasse gemessen werden kann.

Die Masse des initial in den Druckbehälter eingeleiteten Treibmittels kann aus der Differenz der Anfangsgesamtmasse und der Gesamtmasse vor Beginn des Imprägnierens bestimmt werden.

Die nachträglich eingeleitete Masse des Treibmittels kann aus einer Änderung der Gesamtmasse bestimmt werden.

Nach einer weiteren Ausführungsform des Verfahrens ist das gasförmige Treibmittel einer der folgenden gasförmigen Stoffe oder weist zumindest einen der folgenden Stoffe auf: Kohlendioxid ($CO_2$), Stickstoff ($N_2$), Argon (Ar), Helium (He), oder ein Kohlenwasserstoff, Butan, Pentan, Mischungen eines oder mehrerer Gase mit $CO_2$.

Ein Kohlenwasserstoff kann beispielsweise Butan oder Pentan sein.

Gemäß der Erfindung kann das Treibmittel eine Mischung eines oder mehrerer gasförmiger Stoffe mit Kohlendioxid sein.

Gemäß einer Ausführungsform ist das Verfahren dadurch gekennzeichnet, dass das Polymergranulat zumindest eines der folgenden Stoffe aufweist oder durch einen der folgenden Stoffe gebildet ist: einen thermoplastischen Kunststoff, einen duroplastischen Kunststoff, einen thermoplastischen Partikelschaum, ein Granulat zur Herstellung eines thermoplastischen Partikelschaumes, Polypropylen, expandiertes Polypropylen (EPP), Polystyrol, expandiertes Polystyrol (EPS).

Das Polymergranulat kann insbesondere ein hydrophiles Material aufweisen oder aus einem hydrophilen Material bestehen.

Nach einer weiteren Ausführungsform des Verfahrens wird zum Beenden des Imprägnierens des Polymergranulates der im Innenraum des Druckbehälters herrschende Druck abgesenkt.

Nach einer Ausführungsform wird bei oder nach dem Erreichen der vordefinierten Masse der Druck im Druckbehälter abgesenkt, um eine weitere Aufnahme von Treibmittel im Polymergranulat zu verhindern. Dies geschieht beispielsweise durch ein Ablassen des nicht-absorbierten Treibmittels über ein Entlastungsventil in die Umgebung, wobei der Druck in der Regel z.B. auf Normaldruck abgesenkt wird.

Als Folge gibt das Polymergranulat kontinuierlich absorbiertes Treibmittel wieder ab. Die aus dem Polymergranulat entwichene Treibmittelmenge kann bei weiterhin geöffnetem Entlastungsventil einfach über die Abnahme der Gesamtmasse des Druckbehälters mit darin befindlichen Polymergranulat und Treibmittel bestimmt werden.

Alternativ kann der Druck auf einen höheren Wert als den Umgebungsdruck gesenkt und dann das Entlastungsventil wieder geschlossen werden. Die aus dem Polymergranulat entwichene Masse des Treibmittels $\Delta m_2$ kann über die Formel

$$\Delta m_2 = m_3 \cdot \left( \frac{T_3 \cdot p_4}{T_4 \cdot p_3} - 1 \right)$$

ermittelt werden. Dabei sind $T_3$ die Temperatur und $p_3$ der Druck im Innenraum des Druckbehälters und $m_3$ die Masse des im Gasvolumen des Druckbehälters enthaltene Treibmittel, d.h. nicht-absorbiertes Treibmittel, zum Zeitpunkt des Schließens des Entlastungsventils. $T_4$ und $p_4$ sind eine Temperatur und ein Druck im Innenraum des Druckbehälters zu einem späteren Zeitpunkt. In einer vorteilhaften Ausführungsform lässt sich ein Druck $p_3$ einstellen, bei dem kein Treibmittel aus dem Polymergranulat entweicht. Das bedeutet, dass das imprägnierte Polymergranulat beliebig lange vor der Weiterverarbeitung gelagert werden kann, wobei der Grad der Beladung erhalten bleibt.

Gemäß dem erfindungsgemäßen Verfahren kann während des Imprägnierens der Grad der Beladung, d.h. die Menge des durch das Polymergranulat absorbierten Treibmittels, bestimmt werden.

Weitere Merkmale und Vorteile der Erfindung werden nachfolgend anhand der Figurenbeschreibung von Ausführungsbeispielen erläutert. Es zeigen:

Figuren 1A und 1B eine Veranschaulichung des Verfahrens, bei dem kein zusätzliches Treibmittel in den Druckbehälter nachgefüllt wird,

Figuren 2A und 2B eine Veranschaulichung des Verfahrens, bei dem zusätzlich Treibmittel in den Druckbehälter nachgefüllt wird, der Druck konstant gehalten wird und dem Anfangsdruck entspricht, und

Figuren 3A und 3B eine Veranschaulichung des Verfahrens, bei dem zusätzlich Treibmittel in den Druckbehälter nachgefüllt wird, der Druck nach unten aber begrenzt wird und vom Anfangsdruck abweicht.

Mithilfe des erfindungsgemäßen Verfahrens kann das Ende des Imprägnationsprozesses bestimmt werden, indem die Masse des vom Polymergranulat absorbierten Treibmittels ermittelt wird. Es kann eine Zielsetzung der Imprägnation vorgegeben werden, d.h. der zu erreichende Grad der Beladung, und der Prozess des Imprägnierens kann abgebrochen werden, wenn diese Zielsetzung erreicht ist. Dazu wird insbesondere bestimmt, wie viel Treibmittel momentan durch das Polymergranulat absorbiert wurde, indem:

1. im Druckbehälter eine momentane Temperatur bestimmt wird, sowie eine Änderung eines Druckes im Bezug zu einem Anfangsdruck, und/oder

2. eine Masse des Treibmittels bestimmt wird, die nachträglich in den Druckbehälter nachgefüllt wird.

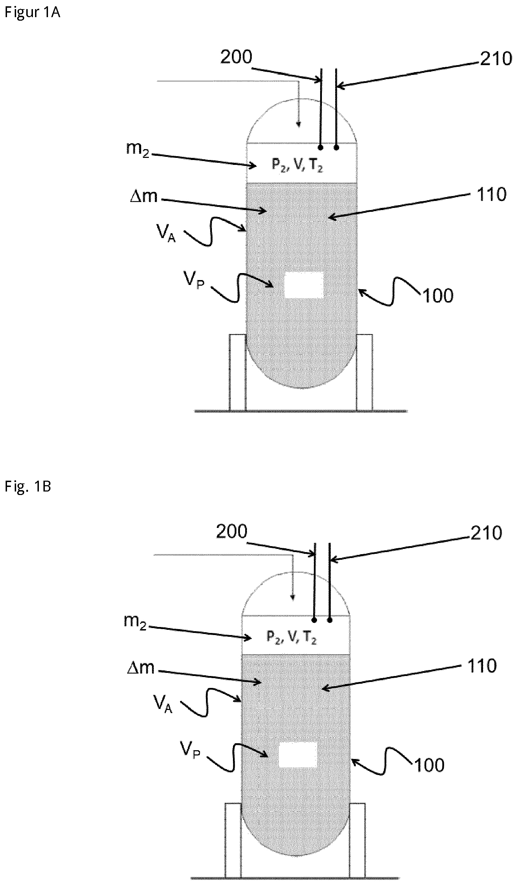

Die Figuren 1A und 1B veranschaulichen eine Ausführungsform des erfindungsgemäßen Verfahrens, bei dem eine initiale Menge Treibgas $m_1$, beispielsweise $CO_2$, in einen Innenraum eines Druckbehälters 100 eingeleitet wurde, in dem ein Polymergranulat 110 angeordnet ist, und im Druckbehälter 100 eine momentane Temperatur $T_2$ bestimmt wird, sowie eine Änderung eines Druckes im Bezug zu einem Anfangsdruck $p_1$. Dabei zeigt Fig. 1A den Zustand vor dem Beginn des Imprägnierens (Anfangsbedingung) und Fig. 1B den Zustand während des Imprägnierens.

Beispielsweise kann mithilfe des erfindungsgemäßen Verfahrens ein Grad der Beladung von 2% erreicht werden. Das bedeutet, dass die Zielsetzung ein Grad der Beladung von 2% ist und der Prozess beendet werden kann wenn bzw. nachdem diese Zielsetzung erreicht worden ist. Ein Grad der Beladung von 2% bedeutet, dass die Masse des Polymergranulates durch eine Absorption des Treibmittels um 2% ansteigt. Ist z. B. Polymergranulat mit einer Masse von 100kg im Innenraum des Druckbehälters 100 angeordnet, so muss für einen Grad der Beladung von 2% eine Masse von 2kg des Treibmittels durch das Polymergranulat 110 absorbiert werden.

Unter der Voraussetzung, dass die allgemeine Gasgleichung

$$p \cdot V = n \cdot R \cdot T$$

mit

$$R_S = \frac{R}{M}$$

gilt, so gilt:

$$p \cdot V = m \cdot R_S \cdot T$$

wobei

m die Masse des Gases, insbesondere des Treibmittels,
M die molare Masse des Gases, insbesondere des Treibmittels,
R die universelle Gaskonstante und
$R_S$ die spezifische Gaskonstante ist.

Am Anfang des Prozesses des Imprägnierens gehorcht das Treibmittel, beispielsweise $CO_2$, der Gleichung:

$$p_1 \cdot V = m_1 \cdot R_S \cdot T_1.$$

Dabei ist

$p_1$ der Druck im Innenraum des Druckbehälters 100 vor Beginn des Absorptionsprozesses, der auch als Anfangsdruck bezeichnet werden kann,

$T_1$ die Temperatur im Innenraum des Druckbehälters 100 vor Beginn des Absorptionsprozesses, die auch als Anfangstemperatur bezeichnet werden kann,

V das Volumen des Treibmittels im Innenraum des Druckbehälters 100, wobei das Volumen V des Treibmittels im Innenraum des Druckbehälters als eine Differenz zwischen einem Volumen des Innenraums des Druckbehälters $V_A$ und einem Volumen des im Innenraum angeordneten Polymergranulates $V_P$ beschrieben werden kann, und

$R_S$ die spezifische Gaskonstante ist, für die gilt: $R_S = \dfrac{R}{M}$.

Der Anfangsdruck $p_1$ und die Anfangstemperatur $T_1$ können gemessen werden, beispielsweise mithilfe mindestens eines Drucksensors 210 und eines Temperatursensors 200 im Innenraum des Druckbehälters 100. Die Volumina $V_A$ und $V_P$ können bestimmt werden, so dass das Volumen V des Treibmittels im Innenraum des Druckbehälters 100 bestimmt werden kann. Die spezifische Gaskonstante des Treibmittels ist bekannt oder kann berechnet werden.
Damit kann die Masse $m_1$ berechnet werden mittels der Beziehung:

$$m_1 = \frac{p_1 \cdot V}{R_S \cdot T_1}.$$

In einer alternativen Ausführungsform kann die Masse $m_1$ beim Einfüllen in den Druckbehälter 100 mithilfe eines Massendurchflussmessers gemessen werden.
Während des Imprägnierens werden eine momentane Temperatur $T_2$ und ein momentaner Druck $p_2$ im Innenraum des Druckbehälters 100 bestimmt. In einer Ausführungsform werden der momentane Druck $p_2$ und die momentane Temperatur $T_2$ kontinuierlich bestimmt. Der momentane Druck $p_2$ kann beispielsweise mithilfe mindestens eines Drucksensors 210 im Innenraum des Druckbehälters 100 gemessen werden. Die momentane Temperatur $T_2$ kann mittels zumindest eines Temperatursensors 200 im Innenraum des Druckbehälters 100 gemessen werden.
Während des Imprägnierens wird zumindest eine Teilmenge des Treibmittels vom Polymergranulat 110 absorbiert. Im Vergleich zum Anfangsdruck $p_1$ sinkt der momentane Druck $p_2$ ab. Die momentane Temperatur $T_2$ kann sich von der Anfangstemperatur $T_1$ unterscheiden. Das Volumen des Treibmittels im Innenraum des Druckbehälters V bleibt unverändert im Vergleich zum Volumen V des Treibmittels im Innenraum des Druckbehälters 100 vor Beginn der Absorption.
Nach einer gewissen Zeitspanne, in der zumindest eine Teilmenge des Treibmittels vom Polymergranulat 110 gebunden wurde, gilt:

$$p_2 \cdot V = m_2 \cdot R_S \cdot T_2.$$

Die Masse $m_2$ beschreibt dabei die Masse des Treibmittels im Innenraum des Druckbehälters 100 bei der momentanen Temperatur $T_2$ und dem momentanen Druck $p_2$, die nicht vom Polymergranulat 110 absorbiert wurde.
Aus den Gleichungen $p_1 \cdot V = m_1 \cdot R_S \cdot T_1$ und $p_2 \cdot V = m_2 \cdot R_S \cdot T_2$ folgt für die Masse $m_2$:

$$m_2 = m_1 \cdot \frac{T_1 \cdot p_2}{T_2 \cdot p_1}.$$

Somit kann die Masse $m_2$ unter Verwendung der Anfangstemperatur $T_1$, des Anfangsdruckes $p_1$, der momentanen Temperatur $T_2$, des momentanen Druckes $p_2$ und der initial in den Innenraum des Druckbehälters eingefüllten

Masse des Treibmittels $m_1$ berechnet werden. $T_1$, $T_2$, $p_1$, $p_2$ und $m_1$ können auf einfache Weise gemessen oder bestimmt werden, so dass auch $m_2$ auf einfache Weise bestimmt werden kann.

Eine momentane Masse des Treibmittels, die vom Polymergranulat 110 absorbiert wurde, $\Delta m$, kann auf einfache Weise mit der Beziehung

$$\Delta m = m_1 - m_2$$

berechnet werden.

In einer Ausführungsform des erfindungsgemäßen Verfahrens kann die momentane Masse des Treibmittels, die vom Polymergranulat absorbiert wurde, $\Delta m$, mithilfe einer speicherprogrammierbaren Steuerung bestimmt werden, insbesondere dynamisch bestimmt werden. Insbesondere kann die speicherprogrammierbare Steuerung die momentane Masse $\Delta m$ aus Druckmessungen und Temperaturmessungen der Anfangsgrößen und der momentanen Größen ($p_1$, $p_2$, $T_1$, $T_2$) berechnen, die von dem mindestens einen Drucksensor 210 und dem mindestens einen Temperatursensor 200 zur Verfügung gestellt werden können.

Wenn der bestimmte Wert der momentanen Masse $\Delta m$ der Zielsetzung entspricht, kann der Prozess des Imprägnierens beendet werden.

Für den Fall, dass für 100kg Polymergranulat 100 die Zielsetzung ein Grad der Beladung von 2% ist, kann das Imprägnieren beendet werden, wenn $\Delta m = 2kg$ erreicht ist.

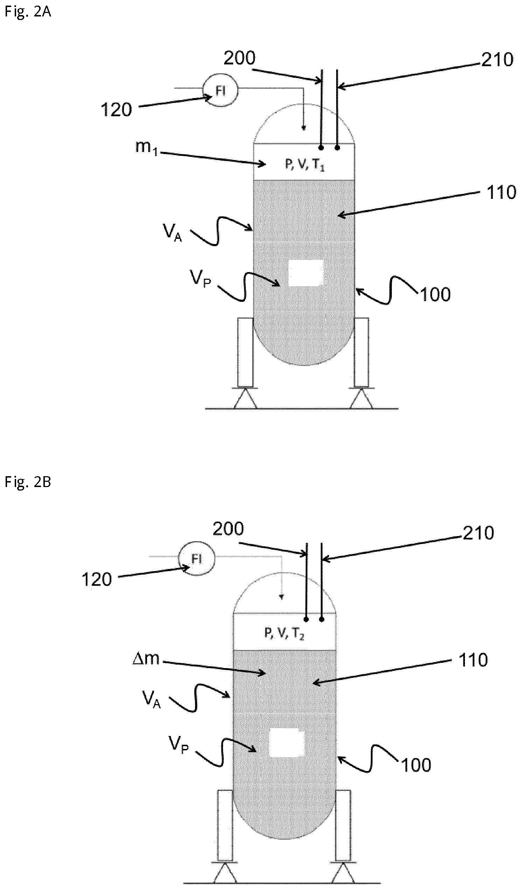

Die Figuren 2A und 2B veranschaulichen eine Variante des erfindungsgemäßen Verfahrens, bei der eine initiale Menge Treibgas $m_1$, beispielsweise $CO_2$, in einen Druckbehälter 100 eingeleitet wurde, in dem ein Polymergranulat 110 angeordnet ist, und kontinuierlich zusätzliches Treibmittel $\Delta m_a$ in den Druckbehälter 100 nachgefüllt wird, so dass der Druck im Innenraum des Druckbehälters konstant bleibt, d. h., dass der momentane Druck $p_2$ gleich dem Anfangsdruck $p_1$ ist. Dabei zeigt Fig. 2A den Zustand vor dem Beginn des Imprägnierens (Anfangsbedingung) und Fig. 2B den Zustand während des Imprägnierens.

Wie in dem in Figuren 1A und 1B beschriebenen Verfahren wird ein Treibmittel in den Innenraum eines Druckbehälters 100 gefüllt und die Masse des initialen Treibmittels $m_1$, die Anfangstemperatur $T_1$, der Anfangsdruck $p_1$ und das Volumen V des Treibgases im Innenraum des Druckbehälters 100 bestimmt.

Während des Imprägnierens können die momentane Temperatur $T_2$ und der momentane Druck $p_2$ mithilfe mindestens eines geeigneten Sensors 200, 210 im Innenraum des Druckbehälters 100 gemessen werden.

Während des Imprägnierens kann zusätzliches Treibmittel mit einer Masse $\Delta m_a$ in den Innenraum des Druckbehälters 100 nachgefüllt werden.

In einer Ausführungsform des Verfahrens kann Treibmittel in regelmäßigen Abständen in den Innenraum des Druckbehälters 100 nachgefüllt werden, wenn eine Differenz zwischen dem Anfangsdruck $p_1$ und dem momentanen Druck $p_2$ betragsmäßig größer ist als 0,5 bar. In einer alternativen Ausführungsform kann zusätzliches Treibmittel nachgefüllt werden, wenn die eine Differenz zwischen dem Anfangsdruck $p_1$ und dem momentanen Druck $p_2$ betragsmäßig größer ist als 0,3 bar, insbesondere größer ist als 0,1 bar.

In einer alternativen Ausführungsform kann kontinuierlich zusätzliches Treibmittel in den Innenraum des Druckbehälters 100 nachgefüllt werden, insbesondere unter Verwendung eines Druckreglers.

Das Nachfüllen des zusätzlichen Treibmittels kann insbesondere mithilfe einer speicherprogrammierbaren Steuerung kontrolliert werden.

Gemäß einer Ausführungsform des Verfahrens kann die Masse $\Delta m_a$ des zusätzlich nachgefüllten Treibmittels mithilfe eines Massendurchflussmessers 120 gemessen werden. Dabei kann sich die Masse $\Delta m_a$ des zusätzlich nachgefüllten Treibmittels aus einer Vielzahl Teilmassen zusammensetzen, wobei eine Teilmasse der Vielzahl der Teilmassen zu einer bestimmten Zeit t in den Innenraum des Druckbehälters 100 eingeleitet werden kann. Mittels einer speicherprogrammierbaren Steuerung kann die Masse $\Delta m_a$ des zusätzlich nachgefüllten Treibmittels bestimmt werden, insbesondere aus der Summe der Vielzahl von Teilmassen. Wenn die Masse $\Delta m_a$ des zusätzlich nachgefüllten Treibmittels die Zielsetzung erreicht hat, kann der Prozess des Imprägnierens beendet werden. In einer erfindungsgemäßen Ausführungsform des Verfahrens kann der Prozess des Imprägnierens automatisch beendet werden, wenn die Zielsetzung erreicht ist.

In einer alternativen Ausführungsform kann die Masse $\Delta m_a$ des zusätzlich nachgefüllten Treibmittels durch eine Bestimmung einer Gesamtmasse bestimmt werden. Die Gesamtmasse kann bestimmt werden unter Verwendung einer Masse des Druckbehälters sowie einer Masse des im Druckbehälter angeordneten Polymergranulates sowie einer Masse des im Druckbehälter befindlichen Treibgases. Die Gesamtmasse kann beispielsweise mittels einer Waage oder eine Wägezelle bestimmt werden. Die Gesamtmasse kann vor dem Beginn des Imprägnierens bestimmt werden, diese wird auch als Anfangsgesamtmasse bezeichnet. Ferner kann eine momentane Gesamtmasse bestimmt werden und eine Differenz zwischen der momentanen Gesamtmasse und der Anfangsgesamtmasse bestimmt, insbesondere berechnet, werden.

Die durch das Polymergranulat-absorbierte Masse des Treibmittels $\Delta m$ kann bestimmt werden gemäß der Beziehung: $\Delta m = \Delta m_a - \Delta m_b$,

wobei $\Delta m_a$ die Masse des zusätzlich nachgefüllten Treibmittels ist und $\Delta m_b$ eine Änderung der Masse des im Innenraum des Druckbehälters 100 angeordneten nicht-absorbierten Treibmittels in Abhängigkeit der Anfangstemperatur $T_1$ und der momentanen Temperatur $T_2$ beschreibt. Das bedeutet mit anderen Worten, dass $\Delta m_b$ den Effekt der Temperatur auf das nicht-gebundene Treibmittel im Innenraum des Druckbehälters 100 beschreibt. Aus der idealen Gasgleichung ergibt sich, dass sich die Masse des nicht-absorbierten Treibmittels im Innenraum des Druckbehälters $\Delta m_b$ bei konstantem Druck (d.h. $p_1 = p_2$) gemäß der folgenden Beziehung verhält:

$$\Delta m_b = m_1 \cdot \left( 1 - \frac{T_1}{T_2} \right)$$

wobei $m_1$ die initial in den Innenraum des Druckbehälters eingeleitete Masse des Treibmittels ist und wobei $T_1$ und $T_2$ die Anfangstemperatur und die momentane Temperatur sind.

In einem Fall, in dem während des Prozesses des Imprägnierens die momentane Temperatur $T_2$ im Vergleich zur Anfangstemperatur $T_1$ sinkt, d.h. $T_1 > T_2$, nimmt $\Delta m_b$ einen negativen Wert an. Damit ist weniger Treibmittel vom Polymergranulat absorbiert worden als es ein Anstieg der Gesamtmasse andeuten würde.

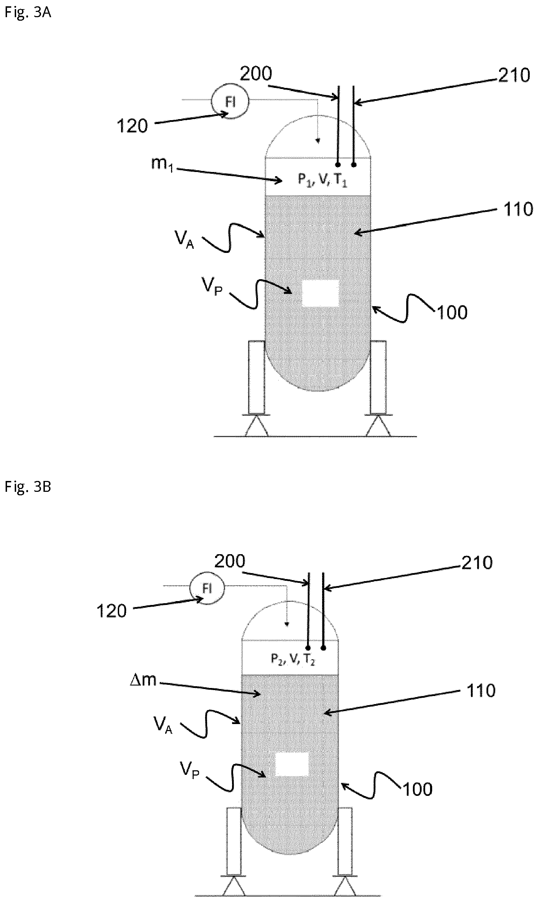

In einer alternativen Ausführungsform des Verfahrens (Fig. 3A und 3B) wird wie bei den zuvor beschriebenen Verfahren Polymergranulat und eine initiale Masse $m_1$ eines Treibmittels in dem Innenraum eines Druckbehälters 100 positioniert bzw. eingeleitet.

Die initiale Masse $m_1$ sowie Anfangsdruck $p_1$ und Anfangstemperatur $T_1$ können bestimmt werden.

Während des Prozesses des Imprägnierens können die Gesamtmasse sowie die momentane Temperatur $T_2$ und der momentane Druck $p_2$ bestimmt werden. Es kann zusätzliches Treibmittel $\Delta m_a$ in den Innenraum des Druckbehälters 100 eingeleitet werden, wobei eine derartige Masse $\Delta m_a$ des zusätzlichen Treibmittels derart eingeleitet wird, dass nach dem zusätzlichen Einleiten der momentane Druck $p_2$ verschieden vom Anfangsdruck $p_1$ ist. Das bedeutet, dass der Druck um einen vordefinierten Wert absinken kann, ohne das dem mit einem Nachfüllen des Treibmittels entgegengewirkt wird. Wenn der momentane Druck $p_2$ weiter sinkt, insbesondere unterhalb eines vordefinierten Schwellenwertes, kann zusätzliches Treibmittel eingeleitet werden. Somit kann entgegengewirkt werden, dass eine Effizienz des Imprägnierens sinkt. Beispielsweise könnte bei einem zu geringen momentanen Druck $p_2$ das Imprägnieren länger dauern als bei einem höheren momentanen Druck $p_2$.

Der Vorteil dieses Verfahrens könnte sein, dass die Masse des nicht-absorbierten Treibmittels $m_2$, die nach dem Imprägnieren verloren geht, reduziert werden könnte im Vergleich zum Verfahren, bei dem zusätzliches Treibmittel zugeführt wird damit der momentane Druck $p_2$ gleich dem Anfangsdruck $p_1$ ist.

**Patentansprüche**

1. Verfahren zum Imprägnieren eines Polymergranulates (110) mit einer vordefinierten Masse eines gasförmigen Treibmittels, wobei

    - das Polymergranulat (110) in einem Innenraum eines Druckbehälters (100) angeordnet wird,
    - ein gasförmiges Treibmittel initial in den Innenraum des Druckbehälters (100) eingeleitet wird, wobei Treibmittel vom Polymergranulat (110) absorbiert wird und ein im Innenraum herrschender momentaner Druck ($p_2$) gemessen wird
    - wobei eine momentane Masse ($\Delta m$) des durch das Polymergranulat absorbierten Treibmittels als Differenz der Masse ($m_1$) des insgesamt initial in den Innenraum des Druckbehälters eingeleiteten Treibmittels und der Masse ($m_2$) eines momentan im Innenraum befindlichen nicht-absorbierten Teils des Treibmittels bestimmt wird, und wobei das Verfahren abgebrochen wird, wenn die momentane Masse ($\Delta m$) des absorbierten Treibmittels größer oder gleich der vordefinierten Masse ist.

2. Verfahren nach Anspruch 1, **dadurch gekennzeichnet, dass** eine momentane Temperatur ($T_2$) im Innenraum des Druckbehälters (100) gemessen wird.

3. Verfahren nach einem der Ansprüche 1 oder 2, **dadurch gekennzeichnet, dass** die momentane Masse ($\Delta m$) mittels einer speicherprogrammierbaren Steuerung bestimmt wird.

4.  Verfahren nach einem der Ansprüche 1 bis 3, **dadurch gekennzeichnet, dass** die Masse des momentan im Innenraum befindlichen nicht-absorbierten Teils des Treibmittels ($m_2$) mittels der Beziehung:

$$m_2 = m_1 \cdot \frac{T_1 \cdot p_2}{T_2 \cdot p_1}$$

bestimmt wird, wobei

$p_1$ und $T_1$ ein im Innenraum vor der Absorption des Treibmittels herrschender Anfangsdruck und eine im Innenraum vor der Absorption des Treibmittels herrschende Anfangstemperatur sind, und wobei
$p_2$ und $T_2$ der momentane Druck und die momentane Temperatur im Innenraum des Druckbehälters sind.

5.  Verfahren zum Imprägnieren eines Polymergranulates mit einer vordefinierten Masse eines gasförmigen Treibmittels, wobei

- das Polymergranulat (110) in einem Innenraum eines Druckbehälters (100) angeordnet wird,
- ein gasförmiges Treibmittel initial in den Innenraum des Druckbehälters (100) eingeleitet wird, so dass Treibmittel vom Polymergranulat (110) absorbiert wird, und wobei hiernach nachträglich Treibmittel in den Innenraum des Druckbehälters (100) nachgefüllt wird, wobei die Massen des initial ($m_1$) und des nachträglich eingeleiteten Treibmittels ($\Delta m_a$) bestimmt werden
- eine momentane Masse ($\Delta m$) des durch das Polymergranulat absorbierten Treibmittels unter Verwendung der Massen des initial ($m_1$) und nachträglich ($\Delta m_a$) in den Innenraum eingeleiteten Treibmittels bestimmt wird, und wobei das Verfahren abgebrochen wird, wenn die momentane Masse ($\Delta m$) des absorbierten Treibmittels größer oder gleich der vordefinierten Masse ist.

6.  Verfahren nach Anspruch 5, **dadurch gekennzeichnet, dass** eine momentane Temperatur ($T_2$) im Innenraum des Druckbehälters (100) gemessen wird.

7.  Verfahren nach Anspruch 5 oder 6, **dadurch gekennzeichnet, dass** der im Innenraum des Druckbehälters (100) herrschende momentane Druck ($p_2$) gemessen wird und das jeweils nachträglich eingeleitete Treibmittel kontinuierlich in den Innenraum des Druckbehälters (100) eingeleitet wird, so dass der im Innenraum des Druckbehälters (100) herrschende Druck konstant bleibt.

8.  Verfahren nach einem der Ansprüche 5 bis 7, **dadurch gekennzeichnet, dass** die momentane Masse ($\Delta m$) des durch das Polymergranulat (110) absorbierten Treibmittels mittels der Beziehung

$$\Delta m = \Delta m_a + m_1 \cdot \left( 1 - \frac{T_1}{T_2} \right)$$

bestimmt wird, wobei $m_1$ und $\Delta m_a$ die Massen des initial und des nachträglich in den Innenraum des Druckbehälters (100) eingeleiteten Treibmittels sind, wobei $T_1$ eine im Innenraum des Druckbehälters (100) vor der Absorption des Treibmittels herrschende Anfangstemperatur ist und wobei $T_2$ die momentane Temperatur im Innenraum des Druckbehälters ist.

9.  Verfahren nach Anspruch 5, wobei der im Innenraum des Druckbehälters (100) herrschende momentane Druck ($p_2$) gemessen wird, und wobei die momentane Masse ($\Delta m$) des durch das Polymergranulat absorbierten Treibmittels unter Verwendung der Massen des initial ($m_1$) und nachträglich ($\Delta m_a$) in den Innenraum eingeleiteten Treibmittels und des momentanen Drucks ($p_2$) bestimmt wird, und wobei das Verfahren abgebrochen wird, wenn die momentane Masse ($\Delta m$) des absorbierten Treibmittels größer oder gleich der vordefinierten Masse ist.

10. Verfahren nach Anspruch 9, **dadurch gekennzeichnet, dass** die momentane Masse ($\Delta m$) des durch das Polymergranulat (110) absorbierten Treibmittels mittels der Beziehung

$$\Delta m = \Delta m_a + m_1 \cdot \left( 1 - \frac{T_1 \cdot p_2}{T_2 \cdot p_1} \right)$$

bestimmt wird, wobei $m_1$ und $\Delta m_a$ die Massen des initial und des nachträglich in den Innenraum des Druckbehälters (100) eingeleiteten Treibmittels sind, $p_1$ und $T_1$ ein im Innenraum vor der Absorption des Treibmittels herrschender Anfangsdruck und eine im Innenraum des Druckbehälters (100) vor der Absorption des Treibmittels herrschende Anfangstemperatur sind, und wobei $p_2$ und $T_2$ der momentane Druck und die momentane Temperatur im Innenraum des Druckbehälters (100) sind.

11. Verfahren nach einem der vorherigen Ansprüche, **dadurch gekennzeichnet, dass**

  - die Masse ($m_1$) des initial in den Innenraum des Druckbehälters eingeleiteten Treibmittels, oder
  - die Masse ($\Delta m_a$) des nachträglich in den Innenraum des Druckbehälters (100) eingeleiteten Treibmittels, oder
  - die Massen ($m_1$, $\Delta m_a$) des initial und nachträglich in den Innenraum des Druckbehälters (100) eingeleiteten Treibmittels

  beim Einleiten des Treibmittels in den Innenraum des Druckbehälters (100) mittels eines Massendurchflussmessers (120) bestimmt werden.

12. Verfahren nach einem der vorherigen Ansprüche, **dadurch gekennzeichnet, dass**

  - die Masse ($m_1$) des initial in den Innenraum des Druckbehälters eingeleiteten Treibmittels, oder
  - die Masse ($\Delta m_a$) des nachträglich in den Innenraum des Druckbehälters (100) eingeleiteten Treibmittels, oder
  - die Massen ($m_1$, $\Delta m_a$) des initial und nachträglich in den Innenraum des Druckbehälters (100) eingeleiteten Treibmittels oder
  - die Masse des in dem Druckbehälter (100) angeordneten Polymergranulats mittels einer Waage, einer Wägezelle oder eines Kraftaufnehmers bestimmt werden.

13. Verfahren nach einem der vorherigen Ansprüche, **dadurch gekennzeichnet, dass** das gasförmige Treibmittel einer der folgenden gasförmigen Stoffe ist oder zumindest einen der folgenden Stoffe aufweist: Kohlendioxid ($CO_2$), Stickstoff ($N_2$), Argon (Ar), Helium (He), ein Kohlenwasserstoff, Butan, Pentan, Mischungen eines oder mehrerer Gase mit $CO_2$.

14. Verfahren nach einem der vorherigen Ansprüche, **dadurch gekennzeichnet, dass** das Polymergranulat (110) zumindest einen der folgenden Stoffe aufweist oder durch einen der folgenden Stoffe gebildet ist: einen thermoplastischen Kunststoff, einen duroplastischen Kunststoff, einen thermoplastischen Partikelschaum, ein Granulat zur Herstellung eines thermoplastischen Partikelschaumes, Polypropylen, expandiertes Polypropylen (EPP), Polystyrol, expandiertes Polystyrol (EPS).

15. Verfahren nach einem der vorherigen Ansprüche, **dadurch gekennzeichnet, dass** zum Beenden des Imprägnierens des Polymergranulates mit dem Treibmittel der im Innenraum des Druckbehälters (100) herrschende Druck abgesenkt wird auf:

  - einen Umgebungsdruck, wobei insbesondere die aus dem Polymergranulat aufgrund der Druckabsenkung wieder freiwerdende Menge an Treibmittel gravimetrisch bestimmt wird, oder
  - einen Druck, der höher als ein Umgebungsdruck ist und bei dem insbesondere das Polymergranulat weder weiteres Treibmittel absorbiert noch verliert.

Figur 1A

Fig. 1B

Fig. 2A

Fig. 2B

Fig. 3A

Fig. 3B

Europäisches
Patentamt

European
Patent Office

Office européen
des brevets

**EUROPÄISCHER RECHERCHENBERICHT**

Nummer der Anmeldung

EP 18 02 0498

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 2017/220671 A1 (BASF SE [DE]) 28. Dezember 2017 (2017-12-28) * Seite 1, Zeile 6 - Zeile 8 * * Seite 2, Zeile 12 - Zeile 21 * * Seite 3, Zeile 26 - Zeile 33 * * Seite 9, Zeile 1 - Zeile 16 * ----- | 1-15 | INV. B29C44/34 C08J9/12 C08J9/18 |
| A | GB 2 034 322 A (SHINETSU CHEMICAL CO) 4. Juni 1980 (1980-06-04) * das ganze Dokument * ----- | 1-15 | |
| A | EP 0 258 669 A2 (KANEGAFUCHI CHEMICAL IND [JP]) 9. März 1988 (1988-03-09) * das ganze Dokument * ----- | 1-15 | |
| A | EP 0 095 109 A1 (KANEGAFUCHI CHEMICAL IND [JP]) 30. November 1983 (1983-11-30) * das ganze Dokument * ----- | 1-15 | |
| A | DE 10 2005 013040 A1 (BASF AG [DE]) 21. September 2006 (2006-09-21) * das ganze Dokument * ----- | 1-15 | RECHERCHIERTE SACHGEBIETE (IPC) B29C C08J B29K |

Der vorliegende Recherchenbericht wurde für alle Patentansprüche erstellt

| Recherchenort | Abschlußdatum der Recherche | Prüfer |
|---|---|---|
| Den Haag | 8. Mai 2019 | Ullrich, Klaus |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 02 0498

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2019

| Im Recherchenbericht angeführtes Patentdokument | Datum der Veröffentlichung | Mitglied(er) der Patentfamilie | Datum der Veröffentlichung |
|---|---|---|---|
| WO 2017220671 A1 | 28-12-2017 | CN 109415529 A | 01-03-2019 |
| | | EP 3475352 A1 | 01-05-2019 |
| | | KR 20190022727 A | 06-03-2019 |
| | | WO 2017220671 A1 | 28-12-2017 |
| GB 2034322 A | 04-06-1980 | AR 221908 A1 | 31-03-1981 |
| | | AU 531655 B2 | 01-09-1983 |
| | | BE 879945 A | 03-03-1980 |
| | | BR 7907291 A | 22-07-1980 |
| | | CA 1122350 A | 20-04-1982 |
| | | CH 642985 A5 | 15-05-1984 |
| | | DD 146960 A5 | 11-03-1981 |
| | | DE 2944068 A1 | 22-05-1980 |
| | | DK 475079 A | 11-05-1980 |
| | | ES 8101096 A1 | 01-12-1980 |
| | | FI 793501 A | 11-05-1980 |
| | | FR 2440965 A1 | 06-06-1980 |
| | | GB 2034322 A | 04-06-1980 |
| | | HU 184678 B | 28-09-1984 |
| | | IN 152984 B | 19-05-1984 |
| | | IT 1127209 B | 21-05-1986 |
| | | MX 150950 A | 24-08-1984 |
| | | NL 7908221 A | 13-05-1980 |
| | | NZ 191999 A | 19-10-1981 |
| | | PL 219511 A1 | 08-09-1980 |
| | | PT 70435 A | 01-12-1979 |
| EP 0258669 A2 | 09-03-1988 | CA 1281848 C | 19-03-1991 |
| | | CN 87105405 A | 06-04-1988 |
| | | EP 0258669 A2 | 09-03-1988 |
| | | KR 910008886 B1 | 24-10-1991 |
| | | US 4766156 A | 23-08-1988 |
| | | US 4772637 A | 20-09-1988 |
| | | US 4785023 A | 15-11-1988 |
| EP 0095109 A1 | 30-11-1983 | AU 559244 B2 | 05-03-1987 |
| | | CA 1213112 A | 28-10-1986 |
| | | EP 0095109 A1 | 30-11-1983 |
| | | US 4448901 A | 15-05-1984 |
| DE 102005013040 A1 | 21-09-2006 | KEINE | |

EPO FORM P0461

Für nähere Einzelheiten zu diesem Anhang : siehe Amtsblatt des Europäischen Patentamts, Nr.12/82